(19) Europäisches Patentamt / European Patent Office / Office européen des brevets

(11) EP 2 601 240 B1

(12) # EUROPÄISCHE PATENTSCHRIFT

(45) Veröffentlichungstag und Bekanntmachung des Hinweises auf die Patenterteilung:
**30.04.2014 Patentblatt 2014/18**

(21) Anmeldenummer: **11735655.0**

(22) Anmeldetag: **26.07.2011**

(51) Int Cl.:
***C08G 65/30*** (2006.01) ***C08G 65/00*** (2006.01)

(86) Internationale Anmeldenummer:
**PCT/EP2011/062778**

(87) Internationale Veröffentlichungsnummer:
**WO 2012/016880 (09.02.2012 Gazette 2012/06)**

(54) **VERFAHREN ZUR HERSTELLUNG VON ALLYALKOHOLALKOXYLATEN**

PROCESS FOR PREPARING ALLYL ALCOHOL ALKOXYLATES

PROCÉDÉ DE FABRICATION D'ALCOXYLATES D'ALCOOLS ALLYLIQUES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **03.08.2010 EP 10171738**

(43) Veröffentlichungstag der Anmeldung:
**12.06.2013 Patentblatt 2013/24**

(73) Patentinhaber: **BASF SE**
**67056 Ludwigshafen (DE)**

(72) Erfinder:
- **KLUMPE, Markus**
  **68163 Mannheim (DE)**
- **OSTROWSKI, Thomas**
  **68199 Mannheim (DE)**
- **ZIPPLIES, Matthias**
  **67434 Neustadt (DE)**

(56) Entgegenhaltungen:
**WO-A1-2004/026468** **DE-A1- 19 543 368**
**DE-A1-102006 048 017** **US-A- 4 412 926**

Bemerkungen:
Die Akte enthält technische Angaben, die nach dem Eingang der Anmeldung eingereicht wurden und die nicht in dieser Patentschrift enthalten sind.

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 601 240 B1

**Beschreibung**

Die Erfindung betrifft ein Verfahren zur Herstellung von Polyetheralkoholen durch Umsetzung eines oder mehrerer ungesättigter Starter mit mindestens einem aktiven Wasserstoffatom pro Molekül mit einem oder mehreren Alkylenoxiden in Gegenwart eines basischen Katalysators.

Polyetheralkohole basierend auf ungesättigten Startern, das heißt Startern mit einer oder mehreren terminalen oder inneren Doppelbindungen, werden unter anderem zur Herstellung von Polyurethan-Schaumstabilisatoren, zur Synthese von Demulgatoren für die Rohölentwässerung, oder auch zur Herstellung von Fließverbesserern von Baumaterialien wie beispielsweise Beton, eingesetzt.

Bevorzugt handelt es sich dabei um Allyl- oder Methallylalkoholalkoxylate, die durch Alkoxylierung von Allyl- oder Methallylalkohol, im Wesentlichen unter Verwendung von Ethylenoxid und/oder Propylenoxid, in basischer Katalyse hergestellt werden. Der ungesättigte Starteralkohol, beispielsweise Allylalkohol oder Methallylalkohol, wird vorgelegt und die für eine ausreichend schnelle Reaktion notwendige Menge an Katalysator, meist ein Alkalimetallhydroxid oder ein Alkalialkoholat, wird zudosiert. Hierzu wird vorteilhaft fester Katalysator eingesetzt, da aufgrund des Siedepunkts des Allylalkohols von 95°C eine einfache destillative Abtrennung von Wasser nicht möglich ist. Da jedoch auch feste Alkalimetallhydroxide noch Wasser enthalten (so ist beispielsweise Kaliumhydroxid in der Regel nur als Feststoff mit einem Kaliumhydroxidgehalt von 88 Gew.-%, bezogen auf das Gesamtgewicht, verfügbar) bilden sich aufgrund des Wassergehaltes im Alkalimetallhydroxid Diole als unerwünschte Nebenprodukte. Dieser Nachteil kann überwunden werden, indem als Katalysatoren Alkoholate eingesetzt werden.

Nach der Zudosierung des Katalysators wird der Alkoxylierungsreaktor inertisiert, in der Regel mit Stickstoff, auf Reaktionstemperatur, die im Falle von ungesättigten Startern im Bereich zwischen etwa 80 und 120°C liegt, aufgeheizt und die Alkylenoxide werden zudosiert, wobei sowohl Block- als auch Mischoxidfahrweisen üblich sind. Als Alkylenoxide werden insbesondere Ethylenoxid und Propylenoxid, aber auch 1,2-Butylenoxid, Isobutylenoxid, Pentenoxid, Decenoxid und Styroloxid eingesetzt.

Problematisch ist, dass ungesättigte Starter in Gegenwart von Basen, wie sie für die oben beschriebenen Alkoxylierungen eingesetzt werden, bei höheren Temperaturen zu Nebenreaktionen führen, die so stark exotherm sind, dass sie ein Sicherheitsrisiko darstellen.

Dynamische Differenzkaloriemetrie-Messungen an einem ungesättigten Starter, insbesondere Allylalkohol und Methallylalkohol in basischem Medium, insbesondere bei Konzentrationen von 0,07 Mol Natrium oder Kaliumhydroxid pro Mol ungesättigtem Starter haben gezeigt, dass exotherme Zersetzungsreaktionen mit hohen Reaktionsenthalpien, oberhalb von 200 kJ/kg, bereits bei Onset-Temperaturen von 145 bis 170°C auftreten. Hierbei wird als Onset-Temperatur vorliegend die Temperatur verstanden, bei der durch dynamische Differenzkalorimetrie-Messung der Beginn einer Wärmetönung detektierbar wird, wobei aus Gründen der Vergleichbarkeit der Messungen diese stets auf eine Heizrate von 2,5 K/min bezogen werden.

Im Reaktorbetrieb müssen die technischen Regeln für Anlagensicherheit, abgekürzt TRAS, eingehalten werden. Die so genannte TRAS 410, Ausgabe 04/2007, schreibt auf Seite 8 zum sicheren Betrieb von Reaktoren einen Abstand für die Endtemperatur einer Reaktionsmischung im Durchgehfall des Reaktors von der Onset-Temperatur einer exothermen Zersetzungsreaktion von 100 K vor, damit eine so genannte adiabate Induktionszeit von 24 h sichergestellt wird.

Unter adiabater Induktionszeit wird die Zeit verstanden, innerhalb der das Reaktionsgemisch weitere Reaktionen eingeht, wobei es sich in der Regel um Zersetzungen handelt, die mit starker Gasbildung einhergehen, und in der Folge zum Druckaufbau und unter Umständen zum Bersten des Reaktors führen können, falls die Sicherheitsventile die Energie nicht abführen können. Bevor diese Zersetzung eintritt, muss durch geeignete Maßnahmen eine hinreichende Absenkung der Temperatur erzielt werden. Es wird davon ausgegangen, dass es dem Betreiber möglich ist, innerhalb der erwähnten 24 Stunden entsprechende Maßnahmen einzuleiten (Ablassen, Notkühlung über zusätzliche, im Falle des Energietotalausfalls ggf. netzunabhängige Pumpen, etc.). Kürzere Induktionszeiten als 24 Stunden sind zulässig, wenn andere geeignete Maßnahmen vorliegen, beispielsweise Sonderkühleinrichtungen, Quenchbehälter oder ausreichend dimensionierte Druckentlastungseinrichtungen vorhanden sind. Hierbei ist zu berücksichtigen, dass insbesondere Ethylenoxid, welches im Reaktionsgemisch unreagiert vorhanden sein kann, als krebserregender Stoff der Kategorie II nicht in die Umwelt freigesetzt werden darf und demnach eine ausreichend dimensionierte Abgaswäsche bzw. -verbrennung vorzusehen ist.

Die sich aufgrund der Begrenzung der adiabaten Endtemperatur im Durchgehfall, zum Beispiel bei Kühlungsausfall, ergebende sehr geringe zulässige Akkumulation von Alkylenoxiden führt allerdings zu einer niedrigen Reaktionsgeschwindigkeit und damit zu langen Alkylenoxiddosierzeiten, da die Alkylenoxidkonzentration linear in das Reaktionsgeschwindigkeitsgesetz eingeht.

In der Patentliteratur werden häufig Alkoxylierungsverfahren von ungesättigten Startern beschrieben, die sehr hohe Alkylenoxidkonzentrationen empfehlen, ohne auf sicherheitstechnische Aspekte einzugehen. Für eine sichere Durchführung der darin beschriebenen Verfahren werden jedoch spezielle, aufwändige Sicherheitsmaßnahmen, beispielsweise Sonderkühleinrichtungen, Quenchbehälter oder ausreichend dimensionierte Druckentlastungsreinrichtungen, erforderlich.

So sollen nach dem Beispiel 1 in US 4,412,926 5 mol Ethylenoxid pro Mol Allylalkohol bei 120 bis 130°C und einem Maximaldruck von 4,1 bar zudosiert werden. Unter Annahme eines Ethylenoxid-Löslichkeitskoeffizienten von 0,517 (dimensionslos) bei 125°C und einem Ausgangs-Anlagerungsgrad von 1 Mol Ethylenoxid pro Mol Allylalkohol ergibt sich in der flüssigen Phase eine freie Ethylenoxid-Konzentration von ca. 9 %. Die Menge an Ethylenoxid in der Flüssigkeit berechnet sich nach der Gleichung

$$\text{Ethylenoxidmenge}_{\text{flüssig}} = \text{Gesamtmenge}_{\text{flüssig}} \cdot \text{Löslichkeitskoeffizient/Ethylenoxid-Dampfdruck} \cdot \text{Ethylenoxid-Partialdruck}.$$

Im Durchgehfall ergibt sich hieraus unter Annahme einer adiabaten Reaktion eine Endtemperatur des Reaktionsgemisches von 219°C, die oberhalb der ersten Onset-Temperatur, von 165°C und auch lediglich ca. 60 K unterhalb der zweiten Onset-Temperatur, von 280°C, für mit 1 Mol Ethylenoxid alkoxylierten Allylalkohol liegt und die somit die Vorgaben der TRAS 410 nicht erfüllt.

Auch in DE 195 43 368 werden laut Beispiel 1 ebenfalls 5 Mol Ethylenoxid pro Mol Allylalkohol, bei 140°C, und einem Maximaldruck von 3 bis 6 bar zudosiert. Hieraus ergibt sich je nach Reaktordruck eine freie Alkylenoxidkonzentration zwischen 3 und 9 %, die im Durchgehfall zu adiabaten Endtemperaturen von 177 bis 237°C führt. Unter Berücksichtigung der oben angegebenen, bekannten Werte für die erste und zweite Onset-Temperatur der Zersetzungsreaktion von mit 1 Mol Ethylenoxid alkoxyliertem Allylalkohol (von 165°C bzw. 280°C), liegen auch in diesem Fall die am Ende der Durchgehreaktion erreichten Temperaturen oberhalb der von der TRAS 410 empfohlenen Werte.

Ein weiteres Problem beim Einsatz von ungesättigten Startern, insbesondere Allylalkohol oder Methallylalkohol, ist, dass sich diese in basischem Medium leicht umlagern. So lagert sich Allylalkohol leicht zu cis-Propenyl um. Die zu cis-Propenylverbindungen umgelagerten Allylgruppen zeigen jedoch in den Folgesynthesen ein unerwünschtes Reaktionsverhalten. Da die Umlagerung von Allyl zu cis-Propenyl-Gruppen durch erhöhte Temperaturen stark beschleunigt wird, kann diese nur vermieden oder reduziert werden, indem bei niedrigen Temperaturen gearbeitet wird. Niedrige Reaktionstemperaturen beeinträchtigen jedoch die Wirtschaftlichkeit des Verfahrens.

Es wurde daher nach Lösungen gesucht, sichere Verfahren zur Alkoxylierung von ungesättigten Startern zur Verfügung zu stellen, die gleichzeitig eine hohe Wirtschaftlichkeit sowie eine hohe Produktqualität gewährleisten.

Die DE-A1 10 2006 048 017 schlägt eine zweistufige Verfahrensführung vor, wobei in einer ersten Verfahrensstufe maximal 10 Mol Alkylenoxid pro Mol ungesättigtem Starter mit einer Katalysatorkonzentration von maximal 0,0085 Mol an basischem Katalysator pro Mol ungesättigtem Starter und in einer zweiten oder gegebenenfalls in weiteren Verfahrensstufen das Reaktionsprodukt aus der ersten Stufe mit weiterem Alkylenoxid bei einer Katalysatorkonzentration von mindestens 0,010 Mol an basischem Katalysator pro Mol ungesättigtem Starter umgesetzt wird.

Diese Verfahrensführung hat jedoch den Nachteil einer schlechteren Raum-Zeit-Ausbeute, weil die zweite Verfahrensstufe erst nach vollständiger Abreaktion der in der ersten Stufe zudosierten Alkylenoxide erfolgen kann, wobei diese, insbesondere auch Grund der sehr niedrigen Katalysatorkonzentration in der ersten Stufe, sehr lange dauern wird, mit der Folge, dass auch die Konzentration an Nebenprodukten erhöht sein kann.

Es war demgegenüber Aufgabe der Erfindung, ein technisch einfaches Verfahren zur Alkoxylierung von ungesättigten Startern zur Verfügung zu stellen, das gleichzeitig den Anforderungen an erhöhter Reaktorsicherheit, an hoher Raumzeitausbeute sowie an hoher Produktqualität genügt.

Die Lösung besteht in einem Verfahren zur Herstellung von Polyetheralkoholen durch Umsetzung eines oder mehrerer ungesättigter Starter mit mindestens einem aktiven Wasserstoffatom pro Molekül mit einem oder mehreren Alkylenoxiden in flüssiger Phase, in Gegenwart eines basischen Katalysators, in einem Reaktor, das dadurch gekennzeichnet ist, dass die Zudosierung des einen oder der mehreren Alkylenoxide in den Reaktor in der Weise erfolgt, dass die Konzentration an nicht-reagiertem Alkylenoxid in der flüssigen Reaktionsmischung im Reaktor mit zunehmendem Anlagerungsgrad des Alkylenoxids an den Starter soweit wie möglich erhöht wird, wobei zu jedem Zeitpunkt die Bedingung erfüllt sein muss, dass die Temperatur am Ende einer Durchgehreaktion mindestens 100 K unterhalb der Onset-Temperatur der Zersetzungsreaktion des flüssigen Reaktionsgemisches liegt.

Es wurde gefunden, dass die Raumzeitausbeute der Alkoxylierungsreaktion ungesättigter Starter, bei gleichzeitiger Gewährleistung einer hohen Produktqualität sowie einem sicheren Anlagenbetrieb erhöht werden kann, indem die Zudosierung des einen oder der mehreren Alkylenoxide in den Alkoxylierungsreaktor in Abhängigkeit vom Alkoxylierungsgrad des ungesättigten Starters geregelt wird, in der Weise, dass zu jedem Zeitpunkt dieselbe so hoch wie möglich eingestellt wird, wobei jedoch stets die Bedingung gewährleistet sein muss, dass die Temperatur am Ende einer Durchgehreaktion mindestens 100 K unterhalb der Onset-Temperatur der Zersetzungsreaktion des flüssigen Reaktionsgemisches liegt.

Die Onset-Temperaturen der Zersetzungsreaktion alkoxylierter ungesättigter Starter hängen vom Anlagerungsgrad des Alkylenoxids an den ungesättigten Starter ab.

In der nachfolgenden Tabelle sind Messergebnisse von DSC-Messungen, bei einer Heizrate von 2,5 K/min, für Allylalkohol bei unterschiedlichen Anlagerungsgraden von Ethylenoxid bzw. Propylenoxid aufgeführt:

| EO | PO | KOH | Onset-Temperatur | ΔH |
|---|---|---|---|---|
| [mol/$mol_{Allyl}$] | | [%] | [°C] | [J/g] |
| 0 | 0 | 8,71 | 240 | 720 |
| 1 | 0 | 5,15 | 280 | 620 |
| 2 | 0 | 3,65 | 300 | 610 |
| 4 | 0 | 2,31 | 300 | 780 |
| 8 | 0 | 1,33 | 310 | 1040 |
| 12 | 0 | 0,94 | 320 | 760 |
| 0 | 4 | 1,87 | 305 | 430 |
| 0 | 8 | 1,05 | 320 | 510 |
| 0 | 12 | 0,73 | 310 | 440 |
| 2 | 2 | 2,07 | 315 | 540 |

Die Tabelle zeigt, dass, in Abhängigkeit vom Anlagerungsgrad des Alkylenoxids an den Allylalkohol bei unterschiedlichen Onset-Temperaturen, die mit zunehmenden Alkoxylierungsgrad ansteigen, Zersetzungsreaktionen starten, die mit hohen Reaktionsenthalpien, von > 200 kJ/kg, einhergehen.

Der Vergleich von Ethoxylaten und Propoxylaten mit Anlagerungsgraden (Alkoxylierungsgraden) zwischen 4 und 12 Mol Alkylenoxid pro Mol Allylalkohol zeigt, dass keine wesentlichen Unterschiede zwischen den Onset-Temperaturen von Ethoxylaten und Propoxylaten bestehen. Dies wird auch durch die DSC-Messung des Mischoxid-Allylalkoholalkoxylates (Allylalkoholethoxylat/Propoxylat) bestätigt: hierfür wird mit 315°C eine Onset-Temperatur gemessen, die nahe bei derjenigen der reinen Ethoxylate (300°C für ein Allylethoxylat mit 4 Mol Ethylenoxid pro Mol Allylalkohol) bzw. Propoxylat (auf 305°C für das Anlagerungsprodukt von 4 Mol Propylenoxid pro Mol Allylalkohol liegt).

Auch nicht alkoxylierter Allylalkohol selbst hat in Gegenwart von Kaliumhydroxid eine Onset-Temperatur von nur 240°C. Um den Empfehlungen der TRAS 410 zu entsprechen, müsste daher im Durchgehfall des Reaktors, das heißt bei Ausfall der Kühlung, das im Reaktionsgemisch akkumulierte freie Alkylenoxid so bemessen sein, dass in der Durchgehreaktion die Maximaltemperatur 140°C (das heißt 100 K unterhalb der Onset-Temperatur der Zersetzungsreaktion) nicht überschritten wird.

Die Erfindung nützt somit die überraschende Erkenntnis, dass mit steigendem Alkoxylierungsgrad eine Erhöhung der Onset-Temperatur einhergeht, und dass ab einem gewissen Alkoxylierungsgrad die Reaktionsenthalpie der Zersetzungsreaktion wieder abnimmt.

Als ungesättigte Starter mit mindestens einem aktiven Wasserstoffatom pro Molekül werden vorliegend Substanzen mit einer oder mehreren terminalen oder inneren Doppelbindungen bezeichnet, insbesondere Etheramine oder Etheralkohole mit mindestens einer ethylenischen Doppelbindung pro Molekül, insbesondere Etheralkohole der allgemeinen Formel I

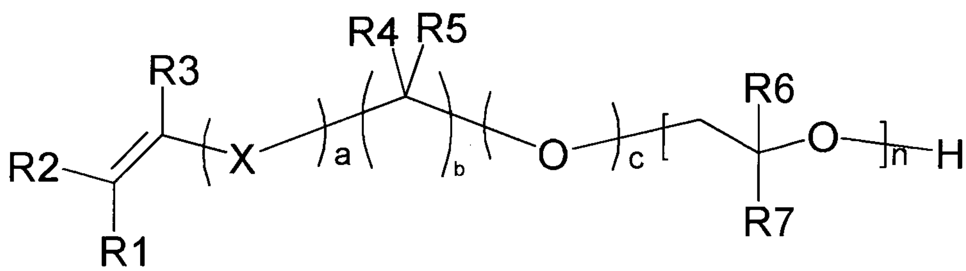

Mit:

- R1-R7 unabhängig voneinader H, Methyl, Ethyl, Propyl oder ein anderer aliphatischer oder aromatischer Rest

- X=O, S

mit a= 0 UND b= ganze Zahl zwischen 0 und 5 UND c= 1 UND 0 > n > 100
ODER. mit a= 1 UND b= ganze Zahl zwischen 0 und 5 UND c= 0 und 0 > n > 100.

Als ungesättigte Starter werden vorliegend bevorzugt Allylalkohol, Methallylalkohol, Isoprenol, 3-Methyl-3-buten-1-ol, 3-Methyl-2-buten-1-ol, 2-Methyl-3-buten-2-ol, Hydroxybutylvinylether, 3,4-Dihydroxy-1-buten eingesetzt.

Besonders bevorzugt werden als ungesättigte Starter Allylalkohol oder Methallylalkohole eingesetzt.

Darüber hinaus können zusätzlich zu den ungesättigten Startern auch Starter mit mindestens einem aktiven Wasserstoffatom pro Molekül eingesetzt werden, die keine Doppelbindungen aufweisen. Hierbei soll jedoch die Konzentration an ungesättigtem Starter mindestens 40 Gew.-%, bevorzugt mindestens 60 Gew.-%, besonders bevorzugt mindestens 90 Gew.-%, bezogen auf das Gesamtgewicht des Startergemisches aus ungesättigten und gesättigten Startern, betragen.

Starter ohne ungesättigte Gruppen, die zusätzlich im Startergemisch enthalten sein können, können insbesondere aus der nachfolgenden Aufzählung ausgewählt sein: Methanol, Ethanol, Propanol, n-Butanol, Isobutanol, t-Butanol, Hexanol, $C_{12}/C_{14}$-Alkohol, $C_9C_{11}$-Oxoalkohole, $C_{13}C_{15}$-Oxoalkohole, Tridecanol N, $C_{16}/C_{18}$-Talgfettalkohole, $C_{12}C_{14}$-Alkohole, $C_{14}C_{16}$-Alkohole, Rizinusöl, hydriertes Rizinusöl, 12-Hydroxystearinsäure, Nonylphenol, Ocenol, 2-Propylheptanol, 2-Ethylhexanol, Ethylenglykol, Diethylenglykol, Triethylenglykol, Butyldiglykol, Butyltriglykol, Butylglykol, Propylenglykol, Dipropylenglykol, Dipropylenglykolmonobutylether, Tripropylenglykol, Octylphenol, Ethylendiamin, Glyzerin, Trimethylolpropan, Phenylglykol, Phenyldiglykol, $\beta$-Naphtol, Isodecanol, Methylglykol, Methyldiglykol, Bisphenol-A, Phenol, o-Kresol, m-Kresol oder p-Kresol.

Als Katalysatoren können Alkalihydroxide wie KOH, NaOH, CsOH, Erdalkalihydroxide wie $Ca(OH)_2$, $Sr(OH)_2$, oder Alkalimetallalkoholate wie KOMe, NaOMe, K-t-BuO, Na-t-BuO eingesetzt werden. Es ist auch möglich, Mischungen der vorstehend genannten Katalysatoren zu verwenden. Die Katalysatoren können sowohl als Feststoffe wie auch als Lösungen oder Suspensionen eingesetzt werden, wobei das Lösungsmittel entfernt wird oder auch nicht. Es ist auch möglich, nur einen Teil des Katalysators zu Beginn der Reaktion zuzusetzen und weiteren Katalysator in einer oder mehreren Portionen zu einem späteren Zeitpunkt, wobei die Katalysatoren gleich oder verschieden sein können und wobei das Lösungsmittel, je nach Anforderung, entfernt werden kann oder im Reaktionsgemisch verbleibt.

Bevorzugt wird als basischer Katalysator Natriumhydroxid oder Kaliumhydroxid als Feststoff oder in wässriger Lösung eingesetzt.

Als Alkylenoxid wird bevorzugt Ethylenoxid und/oder Propylenoxid eingesetzt.

Für die Durchführung des erfindungsgemäßen Verfahrens muss während der gesamten Oxiddosierung die Konzentration an nicht reagiertem Alkylenoxid in der flüssigen Reaktionsmischung im Reaktor sowie der aktuelle Anlagerungsgrad des Alkylenoxids an den ungesättigten Starter, insbesondere Allylalkohol oder Methallylalkohol, bekannt sein.

Zur Bestimmung der Konzentration an nicht reagiertem Alkylenoxid in der flüssigen Reaktionsmischung im Reaktor können an sich alle bekannten Methoden eingesetzt werden:

So ist es möglich, die Konzentration an nicht reagiertem Alkylenoxid in der flüssigen Phase direkt zu messen, beispielsweise mittels optischer Methoden, wie NIR-, IR- oder Raman-Spektroskopie. Derartige Messungen sind allerdings sehr aufwändig, und die Messgeräte, insbesondere Online-IR- und Online-Raman-Spektrometer, relativ empfindlich, so dass diese Messmethoden eher für den Labor- oder Technikumsbetrieb, nicht jedoch für industrielle Anlagen geeignet sind.

Die Konzentration an nicht reagiertem Alkylenoxid in der flüssigen Phase kann darüber hinaus indirekt, beispielsweise über die Viskosität der flüssigen Phase, ermittelt werden, da unreagiertes Alkylenoxid die Viskosität des Reaktionsgemisches erniedrigt. Hierfür sind jedoch aufwändige Kalibrierungen erforderlich, da die Viskosität der flüssigen Phase mit steigendem Alkoxylierungsgrad zunimmt.

Eine weitere indirekte Messmethode ist die Dichtemessung, beispielsweise über Massendurchflussmesser, wobei die Dichte in einem Bypass, der von der Reaktionsmischung durchströmt wird, nach dem Corioliskraft-Prinzip gemessen werden kann.

Auch in diesem Fall ist jedoch, wie vorstehend in Verbindung mit der Viskositätsmessung dargelegt, die Abhängigkeit der Dichte vom Alkoxylierungsgrad zu berücksichtigen.

Weitere indirekte Messmethoden, die auf der Bestimmung physikalischer Größen basieren, sind die Messung der Schallgeschwindigkeit, der Brechungsindices oder auch der Dielektrizitätskonstanten.

Eine weitere indirekte Methode zur Bestimmung der Konzentration an nicht reagiertem Alkylenoxid ist die gaschromatographische Analyse der Reaktorgasphase. Ausgehend von der gaschromatographisch ermittelten Gasphasenzusammensetzung kann, unter Berücksichtigung des Gesamtdrucks im Reaktor, der Partialdruck an Alkylenoxid in der Gasphase berechnet und unter Berücksichtigung des Löslichkeitskoeffizienten von Alkylenoxid, auf die Gasphasenkonzentration desselben geschlossen werden.

Gaschromatographen sind auch für den Einsatz im Großbetrieb in entsprechend robusten Ausfertigungen

verfügbar.

Als ebenfalls, einfach anwendbare und universell einsetzbare Methode zur Bestimmung der freien Alkylenoxidkonzentration hat sich insbesondere die Messung des Gasdrucks im Reaktor erwiesen, woraus sich bei bekanntem Löslichkeitskoeffizienten der Alkylenoxide in der Reaktionsmischung und berechnetem Kompressionsdruck des Stickstoffs die Konzentration an nicht reagiertem Alkylenoxid in der flüssigen Reaktionsmischung berechnen lässt.

Indem der zulässige Reaktordruck in Abhängigkeit vom Anlagerungsgrad des Alkylenoxids und damit der Onset-Temperatur der Zersetzungsreaktion unter Berücksichtigung der Änderung des Stickstoffpartialdrucks infolge der Kompression des Anfangs eingestellten Inertisierungsdruckes soweit wie möglich erhöht wird, wobei zu jedem Zeitpunkt berücksichtigt wird, dass die Temperatur am Ende einer möglichen Durchgehreaktion mindestens 100 K unterhalb der Onset-Temperatur der Zersetzungsreaktion des flüssigen Reaktionsgemisches liegt, stellt die Erfindung eine einfache Möglichkeit zur Verfügung, die Alkoxylierung bei aus sicherheitstechnischer Sicht maximaler Reaktionsgeschwindigkeit durchzuführen.

Das erfindungsgemäße Verfahren wird somit bevorzugt in der Weise durchgeführt, dass die Zudosierung des einen oder der mehreren Alkylenoxide geregelt wird, indem kontinuierlich der Gasdruck im Reaktor gemessen, hieraus, unter Berücksichtigung des vor Reaktionsbeginn eingestellten Inertisierungsdruckes, der Partialdruck des einen oder der mehreren Alkylenoxide und über die Löslichkeit des einen oder der mehreren Alkylenoxide im flüssigen Reaktionsgemisch die Konzentration an nicht reagiertem Alkylenoxid im flüssigen Reaktionsgemisch berechnet, und aus der Konzentration an nicht reagiertem Alkylenoxid im flüssigen Reaktionsgemisch sowie dem auf Basis des zum jeweiligen aktuellen Zeitpunkt errechneten Verhältnisses aus zudosiertem Alkylenoxid und vorgelagerten Starter berechneten Anlagerungsgrad des Alkylenoxids an den Starteralkohol die zu erwartende Temperatur am Ende einer Durchgehreaktion berechnet und der Mengenfluss des einen oder der mehreren zudosierten Alkylenoxide dergestalt geregelt wird, dass die zu erwartende Temperatur am Ende einer Durchgehreaktion mindestens 100 K unterhalb der Onset-Temperatur der Zersetzungsreaktion des Reaktionsgemisches liegt.

Bevorzugt erfolgt die Zudosierung des einen oder der mehreren Alkylenoxide in den Reaktor in der Weise, dass die Konzentration an nicht-reagiertem Alkylenoxid in der flüssigen Reaktionsmischung im Reaktor mit zunehmendem Anlagerungsgrad des Alkylenoxids an den Starteralkohol soweit wie möglich erhöht wird, wobei zu jedem Zeitpunkt die Bedingung erfüllt sein muss, dass die Temperatur am Ende einer Durchgehreaktion mindestens 50 K unterhalb der Onset-Temperatur der Zersetzungsreaktion des flüssigen Reaktionsgemischs liegt.

Beispiel

Zur Herstellung eines Produkts aus Allylalkohol und EO mit einem Alkoxylierungsgrad von 10 mol EO pro mol Allyalkohol wird wie folgt vorgegangen.

In einen 1 L Edelstahlautoklaven werden bei Raumtemperatur 89 g Allylalkohol eingefüllt. Anschließend werden 6,16 g KOH-Schuppen (88 %ig) eingefüllt. Der Reaktor wird verschlossen und bei Raumtemperatur auf einen Druck von 100 mbar (abs) evakuiert. Anschließend wird der Reaktor mit Stickstoff auf Normaldruck aufgepresst und erneut evakuiert bis 100 mbar (abs). Das Vakuum wird wieder mit Stickstoff gebrochen. Der Reaktor wird auf 90 °C aufgeheizt. Dabei stellt sich ein Druck von ca. 0,9 bar(Ü) ein. Anschließend werden 660 g Ethylenoxid bei 95 °C dosiert. Während der Dosierung wird der zulässige EO-Partialdruck, der sich aus der Differenz aus Reaktordruck und Stickstoffpartialdruck (berechnet über die Kompression in Folge der EO-Dosierung) sukzessive erhöht, so dass ein Enddruck von 7,2 bar(Ü) resultiert. Die gesamte Dosierzeit betrug 6,2 Stunden. Man erhält 749,5 g des Produktes Allylalkohol + 10 EO mit einer OHZ von 117,2 mg KOH/g.

Vergleichsbeispiel

Der Versuch wurde wie oben beschrieben wiederholt, allerdings wurde der zulässige Reaktordruck sukzessive auf nur 4,6 bar(Ü) erhöht. Die Dosierzeit betrug 8,5 Stunden.

Das Produkt wies eine OH-Zahl von 116,9 mg KOH/g auf.

Das Beispiel belegt somit, dass bei einer erfindungsgemäßen Verfahrensführung die Raum-Zeit-Ausbeute erheblich erhöht werden kann, bei gleichzeitiger Gewährleistung einer hohen Produktqualität.

## Patentansprüche

1. Verfahren zur Herstellung von Polyetheralkoholen durch Umsetzung eines oder mehrerer ungesättigter Starter mit mindestens einem aktiven Wasserstoffatom pro Molekül mit einem oder mehreren Alkylenoxiden in flüssiger Phase, in Gegenwart eines basischen Katalysators, in einem Reaktor, **dadurch gekennzeichnet, dass** die Zudosierung des einen oder der mehreren Alkylenoxide in den Reaktor in der Weise erfolgt, dass die Konzentration an nicht-

reagiertem Alkylenoxid in der flüssigen Reaktionsmischung im Reaktor mit zunehmendem Anlagerungsgrad des Alkylenoxids an den Starter soweit wie möglich erhöht wird, wobei zu jedem Zeitpunkt die Bedingung erfüllt sein muss, dass die Temperatur am Ende einer Durchgehreaktion mindestens 100 K unterhalb der Onset-Temperatur der Zersetzungsreaktion des flüssigen Reaktionsgemisches liegt, wobei als Onset-Temperatur die Temperatur verstanden wird, bei der durch dynamische Differenzkatorimetrie-Messung, bezogen auf eine Heizrate von 2,5 K/min, der Beginn einer Wärmetönung detektierbar wird.

**2.** Verfahren nach Anspruch 1, **dadurch gekennzeichnet, dass** der ungesättigte Starter Allylalkohol oder Methallylalkohol ist.

**3.** Verfahren nach Anspruch 1 oder 2, **dadurch gekennzeichnet, dass** das Alkylenoxid Ethylenoxid und/oder Propylenoxid ist.

**4.** Verfahren nach einem der Ansprüche 1 bis 3, **dadurch gekennzeichnet, dass** der basische Katalysator ein Alkalimetallhydroxid oder ein Alkalimetallalkohol ist.

**5.** Verfahren nach Anspruch 4, **dadurch gekennzeichnet, dass** der basische Katalysator Natriumhydroxid oder Kaliumhydroxid ist.

**6.** Verfahren nach einem der Ansprüche 1 bis 5, **dadurch gekennzeichnet, dass** die Zudosierung des einen oder der mehreren Alkylenoxide in den Reaktor in der Weise erfolgt, dass die Konzentration an nicht-reagiertem Alkylenoxid in der flüssigen Reaktionsmischung im Reaktor mit zunehmendem Anlagerungsgrad des Alkylenoxids an den Starteralkohol soweit wie möglich erhöht wird, wobei zu jedem Zeitpunkt die Bedingung erfüllt sein muss, dass die Temperatur am Ende einer Durchgehreaktion mindestens 50 K unterhalb der Onset-Temperatur der Zersetzungsreaktion des flüssigen Reaktionsgemischs liegt.

**7.** Verfahren nach einem der Ansprüche 1 bis 6, **dadurch gekennzeichnet, dass** die Zudosierung des einen oder der mehreren Alkylenoxide geregelt wird, indem kontinuierlich die freie Alklyenoxidkonzentration in der flüssigen Phase im Reaktor gemessen und hieraus der Mengenfluss des einen oder der mehreren zudosierten Alkylenoxide dergestalt geregelt wird, dass die zu erwartende Temperatur am Ende einer Durchgehreaktion mindestens 100 K unterhalb der Onset-Temperatur der Zersetzungsreaktion des Reaktionsgemisches liegt.

## Claims

**1.** A process for preparing polyether alcohols by reacting one or more unsaturated starters having at least one active hydrogen atom per molecule with one or more alkylene oxides in the liquid phase in the presence of a basic catalyst in a reactor, wherein the one or more alkylene oxides are introduced into the reactor in such a way that the concentration of unreacted alkylene oxide in the liquid reaction mixture in the reactor is increased as far as possible with increasing degree of addition of the alkylene oxide onto the starter, with the condition that at any point in time the temperature at the end of a runaway reaction is at least 100 K below the onset temperature of the decomposition reaction of the liquid reaction mixture, where the onset temperature is the temperature at which, based on a heating rate of 2.5 K/min, the commencement of evolution of heat is detectable by dynamic differential calorimetry.

**2.** The process according to claim 1, wherein the unsaturated starter is allyl alcohol or methallyl alcohol.

**3.** The process according to claim 1 or 2, wherein the alkylene oxide is ethylene oxide and/or propylene oxide.

**4.** The process according to any of claims 1 to 3, wherein the basic catalyst is an alkali metal hydroxide or an alkali metal alkoxide.

**5.** The process according to claim 4, wherein the basic catalyst is sodium hydroxide or potassium hydroxide.

**6.** The process according to any of claims 1 to 5, wherein the introduction of the one or more alkylene oxides into the reactor is carried out in such a way that the concentration of unreacted alkylene oxide in the liquid reaction mixture in the reactor is increased as far as possible with increasing degree of addition of the alkylene oxide onto the starter alcohol, with it having to be ensured that at any point in time the temperature at the end of a runaway reaction is at least 50 K below the onset temperature of the decomposition reaction of the liquid reaction mixture.

7. The process according to any of claims 1 to 6, wherein the introduction of the one or more alkylene oxides is regulated by continuously measuring the free alkylene oxide concentration in the liquid phase in the reactor and on this basis regulating the flow of the one or more alkylene oxides introduced in such a way that the temperature to be expected at the end of a runaway reaction is at least 100 K below the onset temperature of the decomposition reaction of the reaction mixture.

**Revendications**

1. Procédé de fabrication de polyéther-alcools par mise en réaction d'un ou de plusieurs démarreurs insaturés contenant au moins un atome d'hydrogène actif par molécule avec un ou plusieurs oxydes d'alkylène en phase liquide, en présence d'un catalyseur basique, dans un réacteur, **caractérisé en ce que** l'introduction du ou des oxydes d'alkylène dans le réacteur a lieu de manière à ce que la concentration en oxyde d'alkylène non réagi dans le milieu réactionnel liquide dans le réacteur augmente autant que possible avec le degré d'addition croissant de l'oxyde d'alkylène sur le démarreur, la condition selon laquelle la température à la fin d'une réaction d'emballement se situe au moins 100 K en dessous de la température du début de la réaction de décomposition du mélange réactionnel liquide devant être respectée à tout moment, la température du début étant comprise comme la température à laquelle le début d'un dégagement de chaleur est détectable par une mesure dynamique de calorimétrie différentielle, par rapport à un taux de chauffe de 2,5 K/min.

2. Procédé selon la revendication 1, **caractérisé en ce que** le démarreur insaturé est l'alcool allylique ou l'alcool méthallylique.

3. Procédé selon la revendication 1 ou 2, **caractérisé en ce que** l'oxyde d'alkylène est l'oxyde d'éthylène et/ou l'oxyde de propylène.

4. Procédé selon l'une quelconque des revendications 1 à 3, **caractérisé en ce que** le catalyseur basique est un hydroxyde de métal alcalin ou un alcoolate de métal alcalin.

5. Procédé selon la revendication 4, **caractérisé en ce que** le catalyseur basique est l'hydroxyde de sodium ou l'hydroxyde de potassium.

6. Procédé selon l'une quelconque des revendications 1 à 5, **caractérisé en ce que** l'introduction du ou des oxydes d'alkylène dans le réacteur a lieu de manière à ce que la concentration en oxyde d'alkylène non réagi dans le milieu réactionnel liquide dans le réacteur augmente autant que possible avec le degré d'addition croissant de l'oxyde d'alkylène sur l'alcool démarreur, la condition selon laquelle la température à la fin d'une réaction d'emballement se situe au moins 50 K en dessous de la température du début de la réaction de décomposition du mélange réactionnel liquide devant être respectée à tout moment.

7. Procédé selon l'une quelconque des revendications 1 à 6, **caractérisé en ce que** l'introduction du ou des oxydes d'alkylène est régulée par mesure continue de la concentration en oxyde d'alkylène libre dans la phase liquide dans le réacteur et régulation à partir de celle-ci du courant massique du ou des oxydes d'alkylène introduits de manière à ce que la température attendue à la fin d'une réaction d'emballement se situe au moins 100 K en dessous de la température du début de la réaction de décomposition du mélange réactionnel.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 44129265 B
- DE 19543368
- DE 102006048017 A1